Europäisches Patentamt

(19) European Patent Office (11) Publication number: **0 096 829**

Office européen des brevets **B1**

(12) **EUROPEAN PATENT SPECIFICATION**

(45) Date of publication of patent specification: **28.01.87** (51) Int. Cl.⁴: **G 01 M 11/02, G 01 N 21/41**

(21) Application number: **83105581.9**

(22) Date of filing: **07.06.83**

(54) **Apparatus for determining the refractive-index profile of optical fibres and optical-fibre preforms.**

(30) Priority: **09.06.82 IT 6773582**

(43) Date of publication of application:
**28.12.83 Bulletin 83/52**

(45) Publication of the grant of the patent:
**28.01.87 Bulletin 87/05**

(84) Designated Contracting States:
**AT BE CH DE FR GB LI NL SE**

(56) References cited:
**WO-A-81/02634**
**GB-A-2 071 315**
**US-A-4 362 943**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Coppa, Gianni**
**V.le Alla Vittoria, 40**
**Asti (IT)**
Inventor: **Di Vita, Pietro**
**C.so Francia, 357**
**Torino (IT)**
Inventor: **Potenza, Marcello**
**V.Eleonora Duse 11/4**
**Genova (IT)**
Inventor: **Rossi, Umberto**
**Via Volvera, 14**
**Torino (IT)**

(74) Representative: **Riederer Freiherr von Paar zu Schönau, Anton et al**
**Freyung 615 Postfach 2664**
**D-8300 Landshut (DE)**

EP 0 096 829 B1

Courier Press, Leamington Spa, England.

**Description**

The present invention concerns an apparatus for determining the refractive-index profile of optical fibres or optical-fibre preforms.

The refractive-index profile of optical fibres plays an essential role in the determination of a number of fundamental properties of the fibres, such as light collection efficiency, guiding properties and bandwidth.

Such a profile is critically dependent on that of the preform the fibre is drawn from, and therefore it may be conveniently determined by performing the necessary measurements on the preform; in effect the preform is easier to handle than the fibre, owing to its bigger size. Moreover, generally a knowledge of the profile along the whole fibre or preform is desirable, thus non-destructive methods are to be used, i.e. methods which do not require a slab of fibre or preform to be taken off.

Examples of non destructive methods are reported by I. I. Sasaki, D. N. Payne and M. J. Adams in the paper entitled: "Measurement of refractive-index profiles in optical-fibre preforms by spatial-filtering technique. Electronics Letters, vol. 16, N, 6, 13 March 1980", by GB—A—2071315, WO 81/02634, and by I. I. Sasaki, D. N. Payne, R. J. Mansfield and M. J. Adams in the paper entitled "Variation of refractive-index profiles in single-mode fibre preforms measured using an improved high-resolution spatial-filtering technique" presented at the 6th European Conference on Optical Communications, York, 16—19 September 1980.

According to these methods a light beam illuminates a portion of the side surface of a preform which is displaced step by step in a plane perpendicular to the beam; the beam rays, refracted at angles dependent on the refractive-index profile, are collected by a lens which, for each position of the preform, makes different positions along a straight line of its focal plane correspond to different deflection angles.

Then, according to the first method, the deflection function, i.e. the function which establishes a relationship between the deflection angle and the incidence point of a ray on the preform, is imaged on a photosensitive surface; from said image, consisting of a dark and a bright zone, electrical signals are obtained and processed to supply the refractive-index profile.

According to the second method, a rotating spatial filter, placed in the focal plane of the lens, sweeps the different positions of the straight line and the values of the deflection angles, and hence the refractive-index profile, are obtained from the time elapsing between the instants the individual refracted rays are distinguished (instants signalled by a photodiode placed in a suitable image plane), and the instant the spatial filter passes a reference point.

These known methods present a number of disadvantages. First, the image which appears on the screen does not present a sharp transition from the bright to the dark zone, but the two zones are separated by a half-light zone.

Hence the boundary between the two zones is difficult to define. This difficulty is encountered also when using the second method, because the zone in which the refracted beam is present is not distinctly separated from the dark zone.

The difficulty is increased by the fact that the image to explore or the beam to intercept are not stationary but they are displaced together with the preform.

In addition, the apparatuses carrying out these methods are made complicated and hence expensive by the presence of moving parts (the preform and the devices scanning the image or-intercepting the refracted beam), which limit also the measurement accuracy, and by the necessity of exactly synchronizing the movements of such parts.

It is the object of the present invention an apparatus for determining the refractive-index profile of an optical fibre or an optical-fibre preform, which does not require the detection of a transition from a bright to a dark zone and which does not present moving mechanical parts, so that accurate measurements are obtained with a particularly simple equipment.

According to the invention, an apparatus for determining the refractive-index profile of optical fibres or optical-fibre preforms in which a light source sends a light beam towards the fibre or preform, the axis of which is so oriented that the light beam is incident on the side thereof, which beam after refraction by the fibre or preform passes through an optical system, which converts it to a far-field pattern, which is collected by a photosensitive element which supplies brightness information to a data acquisition system able to obtain the refractive-index profile from such information, is characterized in that an opaque screen is placed between the fibre or preform and the source perpendicularly to the light-beam propagation direction, said screen having an oblique linear slit, which forms the light from said source into a planar beam which defines an oblique planar section through the fibre or preform; in that the optical system forms on the photosensitive element, respectively in two directions perpendicular to the light propagation direction, a near-field pattern that depends on the incidence points of said light beam on the fibre or preform, and the far-field pattern that depends on the deflection angles of the rays of the beam refracted by the fibre or preform; and in that said photosensitive element is the photosensitive element of a television camera connected to the data acquisition system and is scanned line by line, said data acquisition system obtaining from the signals resulting from the scanning the coordinates of the points of maximum brightness on the photosensitive element and, from such coordinates, the deflection function and hence the refractive-index profile.

For a better understanding reference is made to the annexed drawing, in which:

Fig. 1 is a schematic representation of the apparatus according to the invention;

Fig. 2 shows a possible system of image formation on a larger scale;

Fig. 3 and 4 are diagrams showing the image formation.

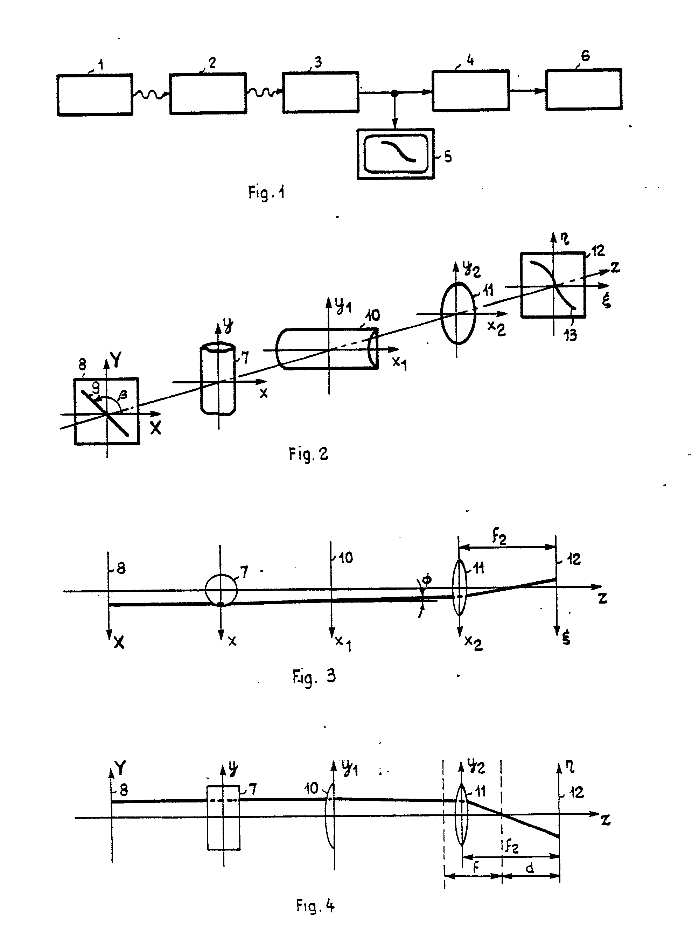

In Fig. 1 the apparatus comprises a light source 1, e.g. a He—Ne laser, which sends a light beam onto the fibre or preform, the refractive index of which is to be determined.

An optical system, here schematized together with the fibre or preform by block 2 and depicted in detail in Fig. 2, forms an image on the sensitive element of a television camera 3, which image consists of a bright curve the points of which are in one-to-one correspondence with the incidence points of the light beam on the fibre or preform.

The image is scanned by the electron beam of the television camera 3 which through a line discriminator 4 supplies a data acquisition and processing system 6 with analog electric signals representing the brightness of the points of the different lines of the sensitive element. In particular the points on the bright curve will be recognized due to the maximum brightness. The image is sent also to a monitor 5 for checking purposes.

The acquisition and processing system 6 converts the analog signals into digital form and obtains from the brightness information the deflection function and hence the refractive-index profile according to relationships well known to the skilled in the art; said relationships are disclosed e.g. in the already mentioned article from Electronics Letters.

Referring to Figure 2, an opaque screen 8 perpendicular to the propagation direction z of the lighit beam is placed upstream the fibre or preform 7, shown for sake of simplicity with vertical axis y; screen 8 is equipped with an oblique slit 9 encompassing an angle $\beta$ with horizontal axis x.

An array of lenses or objectives 10, 11, such as a cylindrical lens with horizontal axis and a spherical lens, is placed downstream the fibre or preform and forms an image 13 on the photosensitive element 12 of television camera 3 (Fig. 1), said element being placed in the focal plane of spherical lens 11. The cell with refractive-index matching fluid in which the fibre is immersed has not been represented for sake of simplicity.

Owing to the two lenses, the image consists of a far-field pattern, i.e. a pattern depending on the deflection angles of the beam refracted by the fibre or preform 7 (angular information) and being formed in one direction (the horizontal direction with the already described arrangement) on element 12, and of a near-field pattern, that is a pattern depending on the incidence points of the light beam on a plane section of the fibre or preform 7 (spatial information) and being formed in the perpendicular direction. The angular content is discriminated by the spherical lens, while the spatial content is discriminated jointly by the two lenses.

Finally, the oblique slit 9 discriminates rays which would have the same deflection angle even though they are incident on different points, in particular non-deflected rays discriminating the incidence points according to their vertical coordinates y and not only to their distances from the axis.

The operation of the optical system is depicted also in Figures 3, 4. Here $X$, $x$, $x_1$, $x_2$, $\xi$ (see also Figure 2) are the horizontal coordinates (perpendicular to direction z) of the points in screen 9, in fibre or preform 7, in lenses 10, 11 and in photosensitive element 12; $Y$, $y$, $y_1$, $y_2$, $\eta$ are the corresponding vertical coordinates; $\varphi$ (Fig. 3) is the deflection angle; $f$, $f_2$ are the focal distances of the optical system 10, 11 and of lens 11, respectively; $d$ is the distance between the focal plane of the optical system and the image plane.

Considering the horizontal plane ($X$, $z$; $x$, $z$; $x_1$; $z$; $x_2$, $z$; $\xi$, $z$) the cylindrical lens has no effect; consequently a point of the fibre or preform with horizontal coordinate $x$ ($=X$) will correspond to a point on element 12 whose coordinate $\xi$ (neglecting the reflection caused by the refractive-index matching fluid) is given by the relation:

$$\xi = f_2 \tan \varphi \qquad (1)$$

In the vertical plane, also cylindrical lens 10 is effective: optical system 10, 11 presents as a whole a transverse magnification

$$\frac{d}{f},$$

and a point of the fibre or preform with coordinate $y(=Y)$ will correspond to a point on element 12 with coordinate:

$$\eta = -\frac{d}{f}y \qquad (2)$$

The sign $-$ indicates that the image is upside down with respect to the object.

Taking into account that $y = Y = X \tan \beta = x \tan \beta$, substituting in (1), the equation of the bright image curve on the photosensitive element is obtained:

$$\xi = f_2 \tan \varphi(x) = f_2 \tan \varphi(-\frac{f\eta}{d}\cot \beta) \qquad (3)$$

Television camera 3 and line discriminator 4 supply the brightness values for each point of coordinate $\xi$ of each line (coordinate $\eta$); the exact position of the bright curve is recognized, as said, because at that point there is a brightness maximum, easy to distinguish even from possible secondary maxima due to diffraction phenomena. There is no uncertainty in the detection of the image points, as in the known methods based on investigation of the gradual transition from a bright area to a dark one.

Moreover, the system of the invention gives an image of a whole plane section of the fibre or preform, which therefore is not to be displaced parallel to its axis.

It is clear that what described has been given only by way of non-limiting example and that variations and modifications are possible without going out of the scope of the invention as defined by the accompanying claim.

## Claim

An apparatus for determining the refractive-index profile of optical fibres or optical-fibre preforms, in which a light source (1) sends a light beam towards the fibre or preform (7), the axis of which is to oriented that the light beam is incident on the side thereof, which beam after refraction by the fibre or preform (7) passes through an optical system (10, 11), which converts it to a far-field pattern, which is collected by a photosensitive element (12) which supplies brightness information to a data acquisition system (6) able to obtain the refractive-index profile from such information, characterized in that an opaque screen (8) is placed between the fibre or preform (7) and the source (1) perpendicularly to the light-beam propagation direction (z), said screen having an oblique linear slit (9), which forms the light from said source into a planar beam which defines an oblique planar section through the fibre or preform (7); in that the optical system (10, 11) forms on the photosensitive element (12), respectively in two directions ($\xi$, $\eta$) perpendicular to the light propagation direction (z), a near-field pattern that depends on the incidence points of said light beam on the fibre or preform (7), and the far-field pattern that depends on the deflection angles of the rays of the beam refracted by the fibre or preform (7); and in that said photosensitive element (12) is the photosensitive element of a television camera (3) connected to the data acquisition system (6) and is scanned line by line, said data acquisition system (6) obtaining from the signals resulting from the scanning the coordinates of the points of maximum brightness on the photosensitive element (12) and, from such coordinates, the deflection function and hence the refractive-index profile.

## Patentanspruch

Vorrichtung zur Bestimmung des Brechungsindex-Profils von optischen Fasern oder von Vorformen optischer Fasern, bei der eine Lichtquelle (1) ein Lichtbündel zu der Faser oder Vorform (7) sendet, deren Achse so ausgerichtet ist, daß das Lichtbündel auf deren Seite auftrifft, woraufhin es nach der Brechung durch die Faser oder Vorform (7) durch ein optisches System (10, 11) hindurchtritt, das es zu einem Fernfeldbild umwandelt, das von einem lichtempfindlichen Element (12) aufgefangen wird, das eine Helligkeitsinformation an ein Datenaufnahmesystem (6) liefert, welches aus dieser Information das Brechungsindex-Profil ermittelt, dadurch gekennzeichnet, daß zwischen der Faser oder Vorform (7) und der Lichtquelle (1) rechtwinklig zur Fortschreitungsrichtung (z) des Lichtbündels ein opaker Schirm (8) angeordnet ist, der einen schrägen geradlinigen Schlitz (9) aufweist, der das von der Quelle kommande Licht zu einem planaren Bündel formt, das durch die Faser oder Vorform (7) einen schrägen planaren Schnitt bildet; daß das optische System (10, 11) am lichtempfindlichen Element (12) in zwei jeweiligen zur Fortschreitungsrichtung (z) des Lichts rechtwinkligen Richtungen ($\xi$, $\eta$) ein Nahfeldbild, das von den Einfallspunkten des Lichtbündels auf der Faser oder Vorform (7) abhängt, und das Fernfeldbild, das von den Ablenkungswinkeln der Strahlen des von der Faser oder Vorform (7) gebrochenen Bündels abhängt, abbildet; und daß das lichtempfindliche Element (12) dasjenige einer Fernsehkamera (3) ist, die mit dem Datenaufnahmesystem (6) verbunden ist, und Zeile um Zeile abgetastet wird, wobei das Datenaufnahmesystem (6) aus den vom Abtasten resultierenden Signalen die Koordinaten der Punkte maximaler Helligkeit am lichtempfindlichen Element (12) und aus diesen Koordinaten die Ablenkungsfunktion und somit das Brechungsindex-Profil ermittelt.

## Revendication

Appareil pour déterminer le profil de l'indice de réfraction des fibres optiques ou des préformes de fibres optiques, dans lequel une source de lumière (1) envoie un faisceau lumineux vers la fibre ou préforme (7), dont l'axe est orienté de manière que le faisceau soit incident sur un côté de celle-ci, et ce faisceau, après la réfraction par la fibre ou préforme (7), passe à travers un système optique (10, 11) qui le transforme en une distribution en champ éloigné, qui est recueillie par un élément photosensible (12) qui fournit des informations de luminosité à un système d'acquisition de données (6) apte à obtenir le profil de l'indice de réfraction de ces informations, caractérisé en ce qu'entre la fibre ou préforme (7) et la source (1) est logé un écran opaque (8), perpendiculaire à la direction (z) de propagation du faisceau lumineux, qui comporte une fente rectiligne oblique (9) qui forme la lumière venant de la source en un faisceau plan identifiant une section plane oblique à travers la fibre ou préforme (7); en ce que le système optique (10, 11) forme sur l'élément photosensible (12), respectivement dans deux directions ($\xi$, $\eta$) perpendiculaires à la direction (z) de propagation de la lumière, une distribution en champ proche, qui est liée aux points d'incidence du faisceau lumineux sur la fibre ou préforme (7), et la distribution en champ éloigné, qui est liée aux angles de déflexion des rayons du faisceau réfracté par la fibre ou préforme (7); et en ce que

**0 096 829**

l'élément photosensible (12) est l'élément photosensible d'une caméra de télévision (3) connectée au système d'acquisition des données (6) et est balayé par lignes, le système d'acquisition des données (6) obtenant des signaux résultant du balayage les coordonnées des points de luminosité maximum sur l'élément photosensible (12) et, de ces coordonnées, la fonction de déflexion et de cette dernière, le profil de l'indice de réfraction.

Fig. 1

Fig. 2

Fig. 3

Fig. 4